# EUROPEAN PATENT APPLICATION

(11) **EP 0 639 400 A1**
(43) Date of publication of application: **22.02.1995**
(21) Application number: 94111551.1
(22) Date of filing: 25.07.1994
(51) Int. Cl.: B01D 53/72, B01D 53/94, B01D 53/04

(54) **Modified large pore zeolites for trapping alkenes**

(30) Priority: 16.08.1993 US 106514; 31.03.1994 US 221689
(71) Applicant: Corning Incorporated, Corning New York 14831 (US)
(72) Inventor: Hertl, William, Corning Inc. Patent Department, Corning, NY 14831 (US); Lachman, Irwing Morris, Corning Inc., Corning, NY 14831 (US)
(74) Representative: Reinhard - Skuhra - Weise & Partner

(57) **Abstract**

A modified large pore zeolite molecular sieve structure is disclosed for adsorbing alkenes emitted during engine start-up, before the catalytic converter has attained its effective operating temperature. The zeolite molecular sieve is modified by inserting certain metal ions into the molecular sieve structure. In particular, a modified y-zeolite having a high adsorption capacity for propylene is disclosed.

## Description

### BACKGROUND OF THE INVENTION

The invention relates to a method of trapping or removing hydrocarbons from exhaust gases emitted from internal combustion engines before they are discharged into the atmosphere, using molecular sieve with non-framework cations. More specifically, this invention is concerned with overcoming pollution problems associated with engine start-up or "cold-start" in a by-pass exhaust system.

Typically, seventy to eighty percent of hydrocarbon emissions from automotive vehicles are emitted during the first minute of engine operation, during which time the main catalyst has not attained light-off and is therefore, not active. The problem is made worse by the fact that the engine requires rich fuel-air ratio to operate during cold-start.

Even though larger molecular weight hydrocarbons have been trapped by adsorption, low molecular weight alkenes have proved more difficult to trap by this method. Low molecular weight alkenes (olefins) are particularly troublesome in regard to emission control because they have a high propensity to form ozone, a major smog-forming constituent.

Although zeolites may be quite useful for adsorbing or occluding many unwanted molecules, they may be subjected to thermal degradation, which can be of particular concern in in-line exhaust systems in which the zeolite is placed in series or in-line with the main converter, and downstream of a light-off catalyst. In such configurations, during use, the zeolite may be continuously exposed to temperatures of up to about 700 to 800°C. Due to possible engine misfires, the absorber in such a system may also encounter temperature spikes as high as 1000°C, which can seriously undermine the thermal stability of zeolite absorbers. Also, zeolites have low desorption temperatures, causing desorption of trapped hydrocarbons before the catalyst attains its active temperature.

While some of the previously suggested methods have provided some adsorption of certain hydrocarbons under certain operating conditions, there continues to be a need for better and improved, cost effective methods for reducing unburned hydrocarbons, particularly, ozone-forming, low molecular weight alkenes, from exhaust emissions during the critical cold-start period.

### SUMMARY OF THE INVENTION

Accordingly, it is the objective of the present invention to provide an improved hydrocarbon absorber capable of adsorbing significant amounts of ozone-forming low molecular weight hydrocarbons, particularly, propylene, as well as high molecular weight hydrocarbons from engine exhaust gas streams. This, and other objects of the invention is achieved by providing a hydrocarbon trap which is capable of "trapping" propylene, as well as higher hydrocarbons from an engine exhaust stream until the absorber reaches its desorption temperature, at which time exhaust gas flow to the absorber or trap is discontinued and any trapped hydrocarbons are subsequently desorbed when the absorber reaches its desorption temperature.

Briefly, the invention relates to an improved zeolite absorber for use in a by-pass engine exhaust emission control system. The improvement is based on our finding that by incorporating certain cations into large pore zeolites, the adsorption capacity of the zeolite for certain alkenes, in particular, propylene is increased without any adverse effect on the adsorption of higher molecular weight hydrocarbons. In particular, the zeolite of the invention contains non-framework cations chosen from base metal transition metal ions, rare earth ions and alkaline earth ions, such as e.g., Cu, Cr, Ni, Zn, Fe, Mg, Mn, La, Ce.

The improved zeolite absorber of the invention can be used in any engine exhaust system in which a hydrocarbon absorber is required. Preferably, the improved metal-containing zeolite of the invention is used in a by-pass engine exhaust system, more preferably, an exhaust system which further includes a main catalytic converter, and conveying means for selectively conveying the exhaust gas stream to the zeolite molecular sieve and to the catalytic converter. Optionally, the system may include a preheater for heating the exhaust gas and/or a heat exchanger for cooling the engine exhaust stream.

As used in this specification:
"high-silica zeolite" refers to those zeolites having a SiO₂/Al₂O₃ molar ratio which exceeds about 10 and for some applications, greater than 100. For the present application, any silica/alumina ratio can be used. It is well known that the acidity, that is the number and strength of acid sites in a zeolite structure is related to the silica/alumina ratio. The lower the ratio, the higher the acidity and the higher the adsorption capacity. However, it is also well known that the thermal stability of zeolites is reduced the lower the silica/alumina ratio. Therefore, unlike in-line systems where very high silica/alumina ratio is required for thermal stability, by-pass systems such as the present are not thermally demanding and as such, it is not necessary to have very high silica/alumina ratios;
"molecular sieve" refers to crystalline substances or structures having pore sizes suitable for adsorbing molecules. The term is generally used to describe a class of materials that exhibit selective absorption properties. To be a molecular sieve, the material must separate components of a mixture on the basis of molecular size and shape differences. Such materials include silicates, the metallosilicates, metalloaluminates, the AlPO₄s, silico- and metalloaluminophosphates, zeolites and others described in R. Szostak, Molecular Sieves: Principles of Synthesis and Identification, pages 2-6 (Van Nostrand Reinhold Catalysis Series, 1989);
"zeolites," the preferred molecular sieve means of the invention, are crystalline aluminosilicates whose structures are based on a theoretically limitless three-dimensional network of AlOx and SiOy tetrahedra linked by the sharing of oxygen atoms, such as more fully disclosed in U.S. Patent 3,702,886, in British Specification No. 1,334,243, published October 17, 1973, in U.S. Patent 3,709,979, and in U.S. 3,832,449, all of which are herein incorporated by reference;
"non-framework cation" means cations located in the molecular sieve by a process of ion-exchange, gaseous diffusion, impregnation, adsorption, or other known methods; non-framework cations are in addition to, and to be distinguished from framework cations which the molecular sieves may possess;
a selected molecular sieve can be "impregnated" with a solution of a nitrate, or other soluble salt, then calcined to convert the salt to its oxide;
"light-off temperature" of a converter is the temperature at which a catalytic converter can convert 50% of carbon monoxide or hydrocarbons or NOx;
"monolithic substrate" is any unitary body or substrate formed from, or incorporating, molecular sieve material; as used herein, a honeycomb substrate is a form of a monolithic substrate, but a monolithic substrate is not necessarily a honeycomb substrate;
"metal" is used herein to broadly include both the elemental form and any compound form of the metal;
"adsorption efficiency" is measured by the initial pick-up rate, that is, the % a given hydrocarbon adsorbed from the cumulative hydrocarbon feed during the first three minutes of engine operation;
"capacity" is the amount of propylene adsorbed after approximately 30 minutes, using standard sample size containing about 1.8 grams of zeolite; and
by "large pore size" we mean any zeolite having pore size of at least 5.6 Angstroms, preferably, greater than or equal to 7.4 Angstroms.

### BRIEF DESCRIPTION OF THE DRAWINGS

Figures 1 and 3 are illustrative schematic drawings of engine exhaust systems in which the zeolite absorber of the invention can be used.

Figure 2 is a chart illustrating, as a function of time, the direction of exhaust gases through the molecular sieve structure and converter of the engine exhaust system illustrated in Figure 1.

Figure 4 is a graph comparing the adsorption of propylene by various cation containing USY zeolites with non-cation-containing zeolites, as a function of time at room temperature.

Figure 5 is a schematic drawing of another embodiment of engine exhaust system in which the zeolite of the invention may be used.

### DETAILED DESCRIPTION OF THE INVENTION

We have found that by exchanging, impregnating or adsorbing certain metal cations into a large pore zeolite molecular sieve structure, the capacity of the molecular sieve to adsorb alkenes is greatly enhanced. Hydrocarbons which can be adsorbed by the zeolite molecular sieve structure of the invention include, but are not limited to, low molecular weight (i.e., light) hydrocarbons, such as alkanes and alkenes of 1 to 6 carbon atoms found in gasoline, diesel fuel, alcohols, and their products of combustion. The zeolite molecular sieve structure of the invention is particularly suited for the adsorption of low molecular weight alkenes (olefins), in particular, propylene, butadiene, butene and other unsaturated hydrocarbons.

In a typical by-pass system, for a period of time commencing with engine start-up until a time prior to the molecular sieve attaining its desorption temperature (generally from ambient to about 80°C), substantially all of the engine exhaust stream is passed through the molecular sieve. During this start-up period, substantial quantities of hydrocarbon emissions generated by the engine, which the converter would not yet be capable of treating, will be adsorbed by the molecular sieve and held until a later time when the converter has reached an effective operating temperature. As a result of the continuous flow of the engine exhaust stream through it, the molecular sieve subsequently attains its desorption temperature sometime before the main catalytic converter is activated. Once the absorber has attained its desorption temperature, the flow of the engine exhaust stream is diverted from the molecular sieve to the main catalyst. If the exhaust stream were not so diverted, the hydrocarbons from this engine start-up period would be desorbed from the molecular sieve and passed through to the main converter before it is capable of effectively converting the hydrocarbons, thus negating the intended benefits of the system of the invention. From ambient conditions to a temperature of about 80°C, the zeolite adsorbs hydrocarbons from the exhaust stream. At higher temperatures, the zeolite loses its adsorption capacity and begins to desorb any trapped hydrocarbons. Thus, unlike an in-line system, in a by-pass system, the absorber may see a maximum temperature of perhaps 350 to 450°C, and only for a very brief period of time. As a result, thermal degradation is not a major concern in the by-pass system of the present invention.

When the main converter has reached an effective operating temperature (i.e., light-off temperature), at least a portion of the exhaust stream is once again directed through the molecular sieve but only an amount and for a period of time sufficient to raise the molecular sieve temperature to its desorption temperature, flush desorbed hydrocarbons from the molecular sieve and convey them to the engine, or any auxiliary regenerator or converter where they may be oxidized to non-toxic by-products. It will be appreciated that even before the converter attains light-off, it has some capability to convert hydrocarbons, and that the system may be designed so that hydrocarbons are desorbed from the molecular sieve and conveyed to the converter even before it has attained light-off. Any such method or design is deemed to be essentially equivalent to the instantly claimed invention. It is also known that some fraction of the adsorbed hydrocarbons generally will be decomposed during the desorption process to carbon, or will be decomposed and oxidized to carbon monoxide and/or carbon dioxide.

The catalysts typically utilized in automotive catalytic converters generally have light-off temperatures in the range of about 300 to 400°C. Hydrocarbons begin to desorb from the zeolite at a temperature below the light-off temperature of the catalyst. Therefore, in the preferred by-pass embodiment, a special engine exhaust system design must be utilized which enables the zeolite to "hold" the adsorbed hydrocarbons until the catalyst has reached light-off temperature and then "release" the hydrocarbons to the catalyst for conversion.

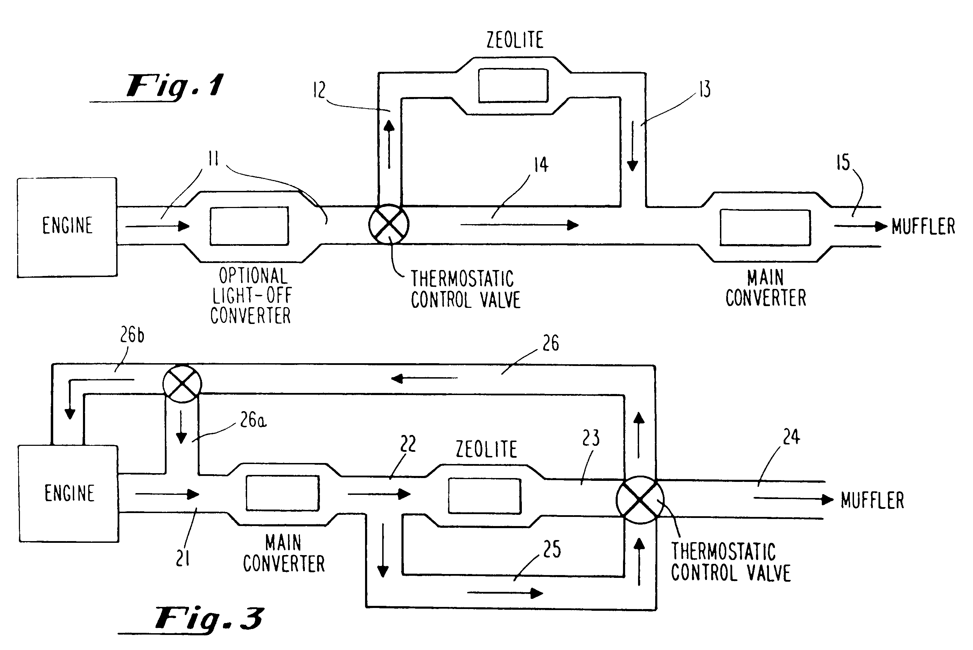

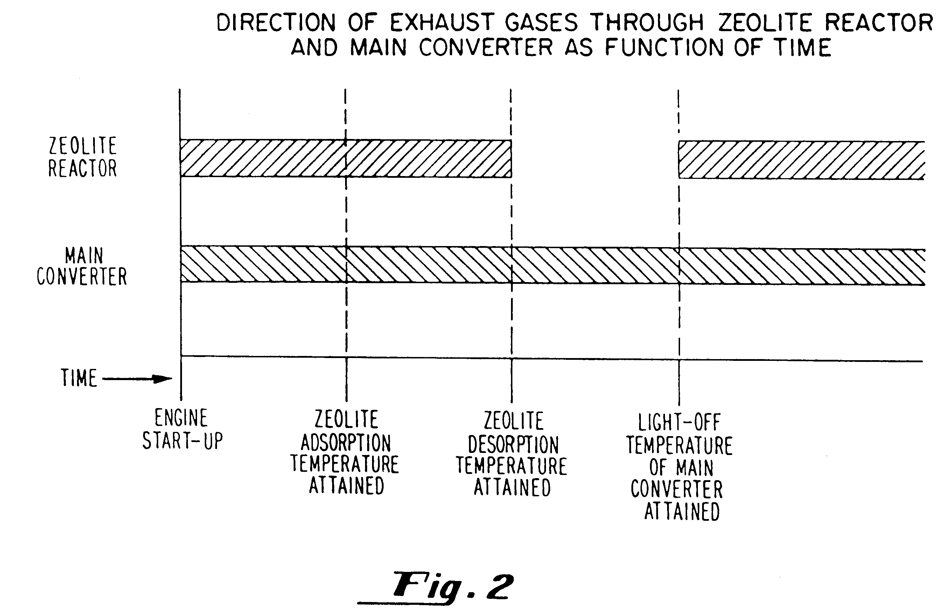

The preferred method of using the zeolite absorber of the invention will now be described by reference to the drawings. The direction of exhaust gases through the zeolite reactor in one preferred embodiment (Figure 1), is shown as a function of time in Figure 2. In the embodiment of Figure 1, an optional light-off converter is positioned closely adjacent to the engine, preferably close enough so that the catalyst can reach activation temperature shortly after engine start-up. During start-up of the engine, exhaust gases are passed from the engine, generally through an exhaust manifold (not shown), and then through line 11 to the optional light-off converter. The exhaust stream is then directed through the thermostatic control valve and through line 12, bypassing line 14 during this start-up period, to the zeolite where hydrocarbons in the exhaust stream are adsorbed. (As used herein, "line" or "lines" refer to the usual exhaust system piping.) Exhaust stream passing through the zeolite, having had hydrocarbon removed therefrom, is then passed through line 13 to the main converter and then through line 15 to the muffler and external atmosphere. Passage of the stream through the main converter begins the process of raising its internal temperature towards its light-off temperature. The hot exhaust gases passing through the zeolite cause its temperature to be raised also, and the thermostatic control valve is programmed so that, prior to the zeolite's attaining its desorption temperature, exhaust gases bypass line 12 and therefore the zeolite and instead pass from the line 11 through the valve and directly to the main converter through line 14. Once the main converter has attained its light-off temperature, as a result of the continued passage of hot gases therethrough, the thermostatic valve operates to direct at least a portion of the exhaust gases through the zeolite in order to raise it to its desorption temperature. This, in turn, causes the release of the hydrocarbons, which then pass with the exhaust gases to the main converter. There, the hydrocarbons that had been held by the zeolite, as well as the hydrocarbon components of the exhaust gases being conveyed directly through line 14, are converted to carbon dioxide and water. The thermostatic control valve can be programmed so that after substantially all hydrocarbons are desorbed from the zeolite, the exhaust gases are diverted in whole or in part from the zeolite; any exhaust gases that so by-pass the zeolite are conveyed only through the converter means and then discharged from the system to the atmosphere.

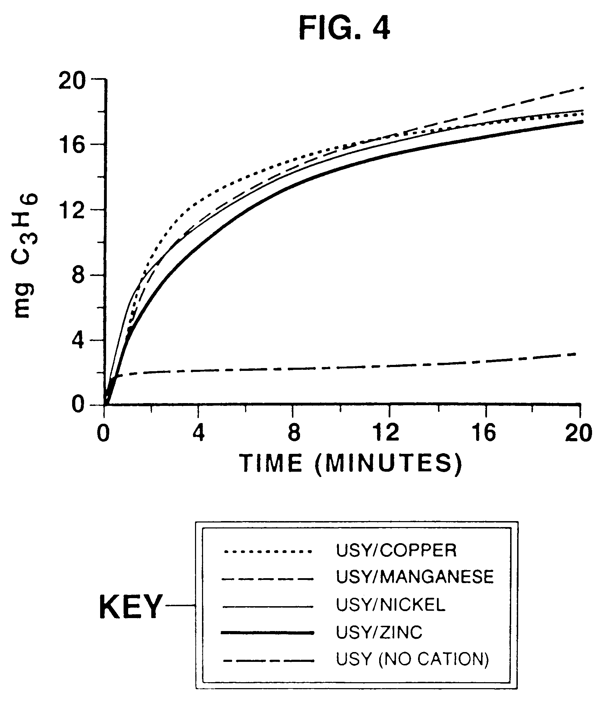

Another embodiment of an engine exhaust system in which the zeolite absorber of the invention may be used, is illustrated in Figure 3. In this embodiment, exhaust gases pass from the engine through line 21 to the main converter and out to line 22. During engine start-up, the thermostatic control valve is adjusted so that exhaust gases pass from line 22 through the zeolite and line 23 and then through line 24 to the muffler and external atmosphere. Until the main converter attains effective operating temperature, hydrocarbons in the exhaust gas will simply pass through the converter to the zeolite where they will be adsorbed. When the zeolite attains its desorption temperature, the thermostatic control valve downstream from the absorber is operated so that the exhaust gases discharged from the main converter are directed away from the zeolite and through line 25, bypassing the zeolite, and then through line 24 and discharged through the muffler. The thermostatic control valve is programmed so that after light-off of the main converter is attained, at least a small portion of the exhaust gases continues to pass from the main converter through the zeolite, with the remaining portion being directed through line 25 and line 24 to the muffler and discharge. The small portion of hot gases that is directed through the zeolite heats the zeolite to its desorption temperature and flushes out the previously adsorbed hydrocarbons. The gases thus discharged from the zeolite are directed through the valve to line 26 and recycled either to the engine (through line 26b) for further combustion or to the main converter (through line 26a) where the hydrocarbons that had initially been held by the zeolite are converted. In this embodiment (Figure 3), the two options for the recycle operation are effected with use of an additional three-way valve in line 26 to convey the recycle stream directly to the engine, through line 26b, or to the intake of the main converter, through line 26a. It will be recognized, however, that exhaust systems of this embodiment can be constructed so that the recycle stream is always directed to one or the other, thereby eliminating the need for the additional valve and one of the branch recycle lines. In either event, if the recycled stream is to be conveyed directly to the main converter, a pump, or other pressure-raising means will generally be required at some point in line 26 or 26a to generate sufficient pressure. For recycle directly to the engine, no pressure-raising means would be necessary since the engine intake operates at vacuum. After the hydrocarbons are desorbed from the zeolite, the valve in line 23 can be set so that exhaust gases from the main converter by-pass the zeolite, in whole or in part, through line 25 and are discharged from the system through line 24.

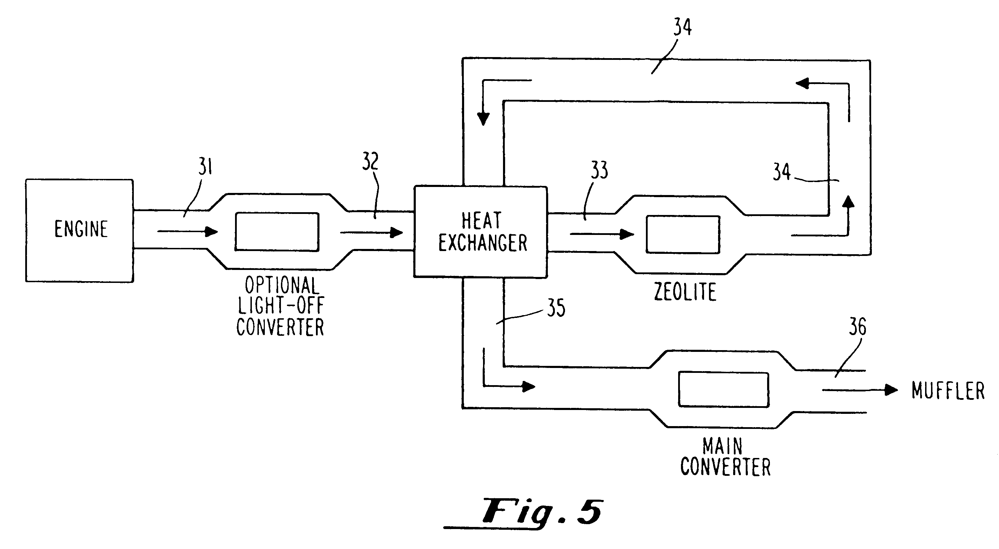

A further embodiment of an engine exhaust system in which the absorber of the invention can be used is illustrated in Figure 5. According to this embodiment, a heat exchanger is positioned in the exhaust stream to cool the hot engine exhaust prior to its passage through the zeolite, thereby delaying the time at which the zeolite will reach its desorption temperature, and thereafter to re-heat that same stream prior to its conveyance to the main converter so that the catalyst therein is heated at a rate sufficient to quickly raise it to its light-off temperature. In this embodiment, an optional light-off converter is positioned closely adjacent to the engine. During start-up of the engine, hot exhaust gases are passed from the engine, generally through an exhaust manifold (not shown), and then through line 31 to the optional light-off converter. The exhaust stream is discharged from the light-off converter through line 32 and passes through a heat-exchanger in which it is cooled, as more fully described below, by transfer of heat to incoming line 34. The cooled engine exhaust is discharged from the heat exchanger through line 33 to the zeolite, where hydrocarbons in the exhaust stream are adsorbed. The exhaust stream exits the zeolite via line 34, which will be cooled still further by heat-loss to the environment, and is then directed to the heat exchanger, which it now enters as the "cold side" fluid to absorb heat from hot engine exhaust line 32. The exhaust stream that entered the heat exchanger as line 34 is discharged at a higher temperature through line 35, which directs it to the main converter. Passage of this re-heated stream through the main converter begins the process of raising the converter's internal temperature towards its light-off temperature. From the main converter, the stream is carried through line 36 to the muffler for ultimate discharge from the system to the atmosphere.

The heat exchanger of this embodiment operates most effectively during the initial start-up period of the engine, when the zeolite itself and lines 33 and 34 are initially cool. The heat exchanger is preferably of the counter-current kind in which lines 34 and 32 enter at opposite ends of the exchanger and pass in opposite directions through the unit (Fig. 5). With such a design, the initially hot gas stream of line 32 is cooled prior to passage through the zeolite, thereby slowing the rate at which the zeolite is heated and delaying the time at which the zeolite's adsorption capability is ended and desorption commences. Particularly with use of an efficient counter-current heat exchanger, desorption can be delayed until the main converter has reached its light-off temperature. It will be appreciated that as the engine continues to run, the temperature difference between line 32 and line 34 will steadily shrink, resulting in a steady increase in the temperature of the exhaust in line 33, which will accelerate the rate at which the zeolite approaches to its desorption temperature. However, by the time the desorption temperature is reached, the main converter will have attained its light-off temperature. Hydrocarbons desorbed from the zeolite will be carried by the engine exhaust stream through lines 34 and 35 to the main converter, where they will be catalyzed to less noxious gaseous prior to discharge to the atmosphere through line 36.

In addition to the counter-current flow discussed above, the heat exchanger can be of the cross-flow type, e.g. constructed of a honeycomb structure as shown in U.S. Patent 3,940,301. However, with suitable and conventional alteration of exhaust piping and connections, the heat exchanger can also be of the rotary type, e.g. constructed of a honeycomb structure as shown in U.S. Patent 4,306,611, or of the stationary, parallel flow type, e.g. constructed of a honeycomb structure as shown in U.S. Patents 4,041,591 and 4,041,592. If desired, the heat exchanger can contain a catalyst for conversion, e.g. as shown in U.S. Patent 4,089,088.

The hydrocarbon trap or molecular sieve means of the invention are capable of adsorbing and desorbing hydrocarbon molecules. The preferred molecular sieve is comprised of any high-silica molecular sieve further characterized by large pore size. As stated above, by large pore size we mean, any molecular sieve having maximum micropore opening of at least 5.6 Angstroms, preferably at least 6.4 angstroms, and more preferably, at least 7.4 Angstroms.

Useful molecular sieves for the invention include silicates (such as the metallosilicates and titanosilicates), metalloaluminates (such as germaniumaluminates), metallophosphates, aluminophosphates (such as silico- and metalloaluminophosphates (MeAPO), SAPO, MeAPSO), gallogerminates and combinations of these. Examples of useful metallosilicates include zeolites, gallosilicates, chromosilicates, borosilicates, ferrosilicates. Examples of molecular sieve materials which are particularly useful for the invention include, Hyper Y, ultrastabilized Y (USY), faujasite, X zeolite, type L zeolite, mazzite, EMC-2, MAPO-36, AlPO4-5, AlPO4-8, VPI-5, and combinations of these, most preferably, USY zeolite. USY, a preferred zeolite of the invention, is a form of Y zeolite having maximum pore opening of about 7.4 Angstroms, which has been treated to increase its organophilicity. A detailed description of ultrastabilized Y may be found in "Crystal Structures of Ultrastable Faujasites", Advances in Chemistry Sciences, No. 101, American Chemical Society, Washington, D.C., pages 266-278 (1971).

As contemplated by this invention, during cold start, all or part of the exhaust gas is passed over a hydrocarbon trap or molecular sieve means (structure), capable of adsorbing the low molecular weight alkenes, such as propylene. The trapped hydrocarbons remain in the adsorbing structure until the temperature of the catalyst is high enough to convert the hydrocarbons, at which time, the trapped hydrocarbons are desorbed from the trap. In particular, the exhaust gas system of the invention includes one or more means for selectively directing the engine exhaust stream as follows: (1) for the period of time prior to the adsorbing structure attaining its desorption temperature, directing substantially all of the exhaust stream through the adsorbing structure and the catalytic converter; (2) for the period of time thereafter, directing substantially all of the exhaust stream through the catalytic converter, bypassing the adsorbing structure; and (3) for the period of time thereafter, after the catalytic converter attains at least its light-off temperature, directing at least a portion of the exhaust stream through the adsorbing structure, and thereafter through the catalytic converter. In stage (3), the directed portion of exhaust stream should be an amount sufficient to raise the temperature of the adsorbing structure to its desorption temperature and thereby effect desorption of hydrocarbons therefrom. In this embodiment, the adsorbing structure or molecular sieve means includes a zeolite structure with non-framework cations.

During cold start, the zeolite not only traps hydrocarbons but also causes cracking of some hydrocarbons. In refinery applications, this is commonly described as "coking." As is well known in the art, the addition of noble metal oxidation catalysts such as palladium, is usually added to the zeolite to insure oxidation of the carbonaceous materials which result from coking. Oxidation occurs after desorption and completes the regeneration of the trap. In automotive applications, burn-off or regeneration is facilitated by high temperature exhaust gas. The amount of noble metal catalyst needed for regeneration is in the range of 1-10 g/ft³ and preferably, 2-4 g/ft³. For the usual automotive emissions catalytic applications, the amount of noble metals needed is significantly higher, generally in the range of 30 to 60 g/ft³.

The catalysts useful in the catalytic converter of the engine system and in the method of this invention are those which are at least capable of converting hydrocarbons to water and carbon dioxide and are well known in the art. For example, noble metal catalysts, such as mixtures of platinum and palladium, are widely used in automotive catalytic converters. These catalysts are capable not only of oxidizing hydrocarbons but also of converting carbon monoxide in the engine exhaust stream to carbon dioxide. In many cases, three-way converters which additionally convert NOx to non-toxic by-products, are used. Typically, a three-way converter would comprise both a noble metal catalyst such as platinum and/or palladium, and rhodium, for example, platinum/palladium/rhodium on gamma alumina with rare earth oxides (e.g., ceria), platinum on ceria-alumina combined with rhodium on zirconia. The different catalysts can be combined and applied in one step, or they can be applied in separate coatings. The catalytic converters mentioned herein generally comprise catalysts such as those discussed above and a ceramic support, such as a ceramic honeycomb structure. The catalyst may, for example, be provided on the surface of the support or may be embedded or dispersed within the ceramic support by methods known in the art and discussed above in connection with the zeolite molecular sieve means.

It is essential that, as soon after engine start-up as possible, the catalyst attains its effective (light-off) temperature. The temperatures of the molecular sieve and the catalyst are raised by virtue of their contact with the hot exhaust gases emitted by the engine. The engine exhaust system of this invention utilizing a by-pass system of a zeolite absorber and a catalytic converter, is designed so that the absorber and converter are positioned to facilitate their specific functions. The actual location of the molecular sieve will depend on several factors such as the type and nature of the catalyst, as well as the geometry of the total emission control system and the design of the automobile. For example, in many automotive exhaust systems, the molecular sieve is positioned at a distance of about 12 to 102 cm (5 to 40") from the engine. To minimize the time needed to attain light-off temperature, additional means can be provided for heating the catalyst. For example, an electrically heated catalyst can be utilized in the system. Alternatively, a separate heater can be placed upstream of the catalyst for the purpose of heating up the catalyst.

It is preferred that the hydrocarbon trap or molecular sieve means contain sufficient material to adsorb that amount of hydrocarbon that is generally unconverted during start-up of the typical automotive engine system. For example, when the molecular sieve structure is a metal-exchanged zeolite, in whatever form the metal-exchanged zeolite is incorporated into the molecular sieve structure, the structure should contain 1-95% by weight zeolite, with the balance being other components such as binders. It will be recognized that because of differences in size and efficiency of various engines, the amount of hydrocarbon adsorbed may vary from as low as 1.0 grams in some situations to as much as 3.0-5.0 grams or higher for other engine systems. Generally, it is preferred that the molecular sieve means be capable of adsorbing at least about 1.0-3.0 grams of hydrocarbon. The sieves useful in this invention generally can adsorb about 0.03 grams of hydrocarbon per gram of sieve. Accordingly, in the typical engine system, for example, there should be at least about 200 grams of sieve in the molecular sieve means.

For ease of discussion, in the following description of the invention, the molecular sieve means is described in terms of zeolites in general, or ultrastabilized Y (or USY) zeolite in particular. Although USY zeolite is a preferred molecular sieve material, reference to USY zeolite in this description is not intended to limit the scope of the invention. As discussed above, any molecular sieve having large pore size, preferably having maximum pore opening greater than 5.6, preferably 6.4, and more preferably, greater than 7.4, Angstroms can be used in the exhaust gas system of the invention. Also, it is to be understood that in addition to ion-exchange, other methods can be employed to insert non-framework cations into the molecular sieve structure such as, gaseous diffusion, adsorption, impregnation and other known methods.

We have found that by using certain metal-exchanged large pore size zeolites, such as USY zeolites, a wide range of hydrocarbons can be adsorbed using a single type of zeolite. This is important because large pore zeolites in general, and USY zeolites in particular, do not ordinarily adsorb light alkenes such as propylene.

The maximum amount of non-framework cations that can be inserted into the molecular sieve by ion-exchange, impregnation or adsorption can vary depending on the atomic weight of the cation species, and in the case of ion-exchange into zeolite absorber, the silica/alumina molar ratio. The maximum amount of non-framework cations inserted in the molecular sieve or zeolite absorbers are preferably in the range of 0.5 to 15 wt. % ion based on the zeolite, more preferably 1-5%. However, the weight percent varies considerably because of the large variation in the atomic weight from low to high atomic numbers.

To increase the adsorption capacity of the zeolite for both low and high molecular weight hydrocarbons, the zeolite may be ion-exchanged with a mixture of suitable metals depending on the desired application. Thus, it is contemplated that by ion exchanging USY zeolite with Zn and one or more of Cu, Cr, La for example, a synergistic effect will be observed in which the adsorption capacity for both propylene and iso-pentane are significantly improved. Similar synergistic effects can also be obtained by mixing other combinations of metals to increase the capacity of the zeolite to adsorb hydrocarbons of varying sizes using the same zeolite. In the past, such results could only be obtained by mixing different zeolites or by complex designs in which more than one absorber unit is used.

While the present method improves the capacity of large pore zeolites to adsorb small hydrocarbon molecules, no improvement was seen when small pore zeolites were similarly treated with metal ions. Beta zeolites and ZSM-5 zeolites of various silica-to-alumina molar ratios have been shown to adsorb appreciable amounts of propylene because of their relatively small pore sizes and the presence of acid sites. Beta zeolites exhibit maximum and minimum pore sizes of 7.6 x 6.4, and 5.5 x 5.5 Angstroms, respectively. And ZSM-5 zeolites have maximum and minimum pore sizes of 5.3 x 5.6, and 5.1 x 5.5 Angstroms, respectively. When metal cations were exchanged into such small pore size zeolites (two Beta zeolites having silica to alumina ratios of 40:1 and 25:1, and three ZSM-5 zeolites having silica to alumina ratios of 30:1, 150:1, and 280:1), no appreciable differences were observed in the adsorption capacities or initial pick-up rates of all five samples for propylene. Without intending to be bound by theory, it is believed that the cation exchange creates sites on large pore zeolites that are capable of adsorbing small molecules. On the other hand, the creation of such sites on small pore zeolites does not seem to improve adsorption and may hinder the adsorption capacity of such absorbers.

The hydrocarbon trap or molecular sieve means of the invention, may be utilized in any number of forms. For example, the metal cation-exchanged molecular sieve or zeolite powders may be utilized directly in pellet form, or it may be embedded in, or coated on porous ceramic pellet beads. Alternatively, the molecular sieve or zeolite can be ion-exchanged, adsorbed, or impregnated with non-framework cations after the molecular sieve or zeolite has been formed in pellet form, or embedded in, or coated on porous ceramic pellets or beads. Use of pelletized molecular sieve materials however, tends to cause high flow resistance. It is preferred to provide the molecular sieve or zeolite in the form of or in combination with a monolithic substrate, for example, by (1) extruding or forming the zeolite into a porous monolithic structure such as a honeycomb, (2) embedding or coating zeolite on a metal, metal alloy, ceramic, or glass ceramic substrate, such as honeycomb substrates, preferably extruded honeycombs or (3) by crystallizing zeolite on the surface of a metal, metal alloy, ceramic, or glass ceramic substrate (i.e., by forming the zeolite in situ). If the zeolite absorber is provided in form (3) above (in situ), the non-framework cations are inserted in the zeolite molecular sieve after the zeolite has been formed in situ. In situ growth of Y-Zeolites, ion-exchanged with metal cations will further reduce the cost of the present invention as Y-Zeolites can be in situ grown at atmospheric pressures, without the need for autoclaves. In this embodiment, a sintered monolithic body, which comprises a porous ceramic material and 1-40% by weight, based on the total body weight, of active silica embedded within the ceramic material, is hydrothermally treated with an aqueous solution comprising sodium oxide or hydroxide and optionally alumina to crystallize a desired zeolite on the surface of the body.

If the zeolite absorber is provided in forms (1) and (2) of the immediately preceding paragraph, the non-framework cations can be inserted in the molecular sieve or zeolite before or after forming the substrate or monolithic structure. The substrate can have any degree of wall porosity. In a preferred embodiment, the substrate exhibit, preferably, moderate to high wall porosity, that is, about 30-70% by volume, more preferably, 30-50% by volume.

The substrate can be any material suitable for high temperature application such as certain metals, metal alloys, ceramics, glass-ceramics, glass, high surface area-high temperature stable oxides, and combinations of these materials. Examples of useful substrate materials include, cordierite, mullite, clay, talc, zircon, zirconia, spinel, alumina, silica, borides, lithium aluminosilicates, alumina silica, feldspar, titania, fused silica, nitrides, carbides and mixtures of these. Useful metals for the substrate include, substrates formed of iron group metals such as Fe-Al, Fe-Cr-Al alloys, stainless steel, and Fe-Nickel alloys.

The molecular sieve material can be applied to substrate for example, by conventional washcoat, spraying or other well known techniques such as disclosed in coassigned U.S. Patent Nos. 3,730,910, 4, 381,255, 4,631,267, 4,657,880, 4,637,995, and 4,800,187, all herein incorporated by reference.

### EXAMPLES

The adsorption capacity and initial pick-up of USY zeolites exchanged with several cations are given in Table 1 below for certain hydrocarbons, and illustrated in Fig. 4 for propylene.

The experiments were carried out using washcoated zeolites on cordierite honeycomb supports having cell density of 400 cells per square inch (cpsi), and wall thickness of 0.0065". In some experiments, the washcoat slurries were prepared by mixing the indicated zeolites, which have already been ion-exchanged with the indicated cations, with an alumina colloidal suspension, Nyacol Al-10 (manufactured by PQ Corporation).

In other experiments, the ion exchange was carried out after wash coating by inserting the cation after the zeolite was washcoated on the honeycomb support. After heat treatment, the weight ratio of zeolite to alumina binder for each zeolite was 85:15. The slurry coated honeycomb supports were then dried at about 100°C, and heat treated in the range of 500-600°C. The amount of washcoat on each sample after heat treatment was in the range of 35-40 weight percent.

Other experiments were carried out in the presence of synthetic exhaust gas, both with and without water. The propylene adsorption of USY zeolite was compared with the adsorption of cation-exchanged USY zeolite. When USY zeolite is contacted with propylene, its propylene adsorption is relatively low, 7.3 mg in the absence of water and 3.5 mg in the presence of water. When Cu-exchanged USY zeolite is used, the propylene adsorption increases significantly to 19 mg in the absence of water and 8.1 mg in the presence of water.

Adsorption was carried out in the presence of synthetic exhaust gas mixture of the following composition: 500 ppm of the indicated hydrocarbon; 1000 ppm NOx; 1% CO; 0.33% H₂; 0.77% O₂; 14% CO₂; balance N₂, and at a space velocity (SV) of 50,000 changes/hr. For reference, the hydrocarbon adsorption capacity and initial pick-up of the cation-exchanged USY zeolites was compared with non-ion-exchanged USY zeolite. All examples were carried out using USY zeolite having silica to alumina ratio of 11.5:1.

**TABLE 1**

| Cation (Vol) | Gas | Ro(%)** | Capacity (mg)* | Cation Loading On Zeolite (wt.%) |
|---|---|---|---|---|
| None | C₂H₄ | 12 | 3.9 | - |
| | C₃H₆ | 12 | 4.00 | |
| | C₅H₁₂ | 71 | 44.00 | |
| Cu | C₂H₄ | 12 | 3.9 | 1.76 |
| | C₃H₆ | 55 | 19.30 | |
| | C₃H₆/H₂O | 6 | 1.50 | |
| | C₅H₁₂ | 60 | 37.00 | |
| Cu | C₂H₄ | 23 | 5.68 | 3.0 |
| | C₃H₆ | 41 | 13.66 | |
| Cr | C₃H₆ | 59 | 19.00 | 0.74 |
| | C₅H₁₂ | 45 | 18.00 | |
| Mn | C₃H₆ | 48 | 19.81 | 2.07 |
| | C₅H₁₂ | 59 | 59.80 | |
| Ni | C₃H₆ | 40 | 17.45 | 1.49 |
| | C₅H₁₂ | 59 | 37.75 | |
| Zn | C₃H₆ | 48 | 18.54 | 4.0 |
| | C₅H₁₂ | 76 | 57.96 | |
| Fe | C₂H₄ | 4 | 1.9 | 1.99 |
| | C₃H₆ | 49 | 23.57 | |
| Mg | C₃H₆ | 16 | 5.0 | 0.58 |
| La | C₂H₄ | 5 | 3.9 | 1.72 |
| | C₃H₆ | 53 | 30.30 | |
| Ce | C₂H₄ | 6 | 3.5 | 1.24 |
| | C₃H₆ | 29 | 11.00 | |

| | | | | |
|---|---|---|---|---|
| * Capacity is the amount of propylene adsorbed after approximately 30 minutes, using standard sample size containing about 1.8 grams of zeolite. | | | | |
| ** Initial pick-up rate is the % hydrocarbon adsorbed from the cumulative hydrocarbon feed during the first three minutes; this is a measure of adsorption efficiency. | | | | |

A zeolite absorber of the invention, in the form of a honeycomb structure was placed in a reaction chamber in a furnace, and exposed to the synthetic exhaust gas over the temperature range ambient to 600°C, and heat treated at 600°C in air and cooled in nitrogen. This activates the hydrocarbon adsorbing agent and removes water. The experiment was repeated using the above synthetic exhaust gas mixture as well as with other hydrocarbons. The concentration of hydrocarbon in the exhaust gas entering and leaving the reaction chamber is monitored to obtain the amount of hydrocarbon adsorbed. The results are plotted in FIG. 4 which shows the quantity of propylene adsorbed with time for the non-framework cation exchanged molecular sieve compared to USY (the control). As shown, the control zeolite adsorbed only about 2 mg of propylene compared to absorptions of from about 16 to 20 mg for the molecular sieves containing non-framework cations.

To ensure that the process of ion-exchange did not adversely affect the capacity of the zeolites to adsorb large molecules, the adsorption of isopentane, a higher molecular weight hydrocarbon, was also measured. No deleterious effect was seen in the capacity of the metal-containing zeolites to adsorb larger hydrocarbon molecules. In the case of Zn, improved adsorption of large molecules was observed.

## Claims

1. In a by-pass engine exhaust emission control system for converting hydrocarbons in a hydrocarbon-containing exhaust stream to water and carbon dioxide, comprising a housing adapted to receive a molecular sieve structure, and a main catalytic converter, the improvement being that the molecular sieve structure is characterized by maximum pore openings greater than 5.6 Angstroms and further comprises non-framework cations selected from ions of the group consisting of copper, chrome, nickel, zinc, manganese, magnesium, lanthanum, cerium and combinations of these.

2. The by-pass exhaust system of claim 1, wherein the molecular sieve structure is selected from the group consisting of zeolites, metallosilicates, titanosilicates, metalloaluminates, germaniumaluminates, metallophosphates, aluminophosphates, silicoaluminophosphates, metalloaluminophosphates, gallogerminates, gallosilicates, chromosilicates, borosilicates, ferrosilicates and combinations of these.

3. The by-pass exhaust system of claim 2, wherein the molecular sieve structure comprises zeolite selected from the group consisting of Hyper Y, USY zeolite, faujasite, X zeolite, type L zeolite, mazzite, EMC-2, MAPO-36, AlPO4-5, AlPO4-8, VPI-5, and combinations of these.

4. The by-pass exhaust system of claim 3, wherein the zeolite is characterized by maximum pore openings of at least 7.4 Angstroms.

5. The by-pass exhaust system of claim 3, wherein the zeolite molecular sieve structure is supported on a substrate comprising metals, metal alloys, ceramics, glass-ceramics, glass, and temperature stable oxides.

6. The by-pass exhaust system of claim 5, wherein the substrate comprises beads, pellets and honeycomb monolith.

7. The by-pass system of claim 6, wherein the substrate is a ceramic honeycomb structure comprises cordierite, mullite, clay, talc, zircon, zirconia, spinel, alumina, silica, borides, lithium aluminosilicates, alumina silica, feldspar, titania, fused silica, nitrides, carbides and mixtures of these, and wherein the honeycomb structure is characterized by wall porosity in the range of 30-70% by volume.

8. Use of the system according to any one of claims 1-10 in a method of controlling hydrocarbon emissions from an internal combustion engine comprising:
providing main catalytic converter means for converting hydrocarbons in the hydrocarbon-containing exhaust stream to water and carbon dioxide, the main catalytic converter means having a light-off temperature;
providing molecular sieve means for adsorbing hydrocarbons from the exhaust stream;
selectively directing the exhaust stream so as to
(i) direct, for a first period of time prior to the molecular sieve means attaining its desorption temperature, substantially all of the exhaust stream through the molecular sieve means and the converter means;
(ii) direct, for a second period of time thereafter, substantially all of the exhaust stream through the catalytic converter means, bypassing the molecular sieve means; and
(iii) direct, for a third period of time thereafter, after the catalytic converter means attains at least its light-off temperature, at least a portion of the exhaust stream through the molecular sieve means and thereafter through the main catalytic converter means, the directed portion of exhaust stream being sufficient to raise the temperature of the molecular sieve means to its desorption temperature and thereby effect desorption of hydrocarbons therefrom;

9. A method of removing low molecular weight alkenes (olefins) from an engine exhaust gas stream by contacting the gas stream with a zeolite absorber having an average bed temperature below 200°C, the absorber comprising a zeolite structure having inserted therein cations selected from the group of ions consisting of Cu, Cr, Ni, Mg, Mn, Zn, Fe, La Ce, and combination of these, the zeolite structure being characterized by maximum pore openings greater than 5.6 Angstroms.

10. The method of claim 9, wherein the zeolite is selected from the group consisting of Hyper Y, USY zeolite, faujasite, X zeolite, type L zeolite, mazzite, EMC-2, MAPO-36, AlPO4-5, AlPO4-8, VPI-5, and combinations of these, and/or the low molecular weight hydrocarbons comprise propylene, or other lower alkenes having 2 to 5 carbon atoms.

11. The method of claim 9 or 10, wherein the cation is formed by a method selected from the group consisting of impregnation, gaseous diffusion, adsorption and ion-exchange.

12. Method of making a the molecular sieve for the system of any one of claims 1-7, characterized by applying a zeolite structure selected from the group consisting of Hyper Y, USY zeolite, faujasite, X zeolite, type L zeolite, mazzite, EMC-2, MAPO-36, AlPO4-5, AlPO4-8, VPI-5, and combinations of these, having maximum pore size openings >5.6 Angstroms, and
a loading of said non-framework cations, optionally by ion exchange, gaseous diffusion, adsorption, or impregnation.

13. The method of claim 12, wherein the loading of non-framework cations applied to the zeolite is in the range of 0.5 - 15, or preferably of 1-5 weight percent, based on the zeolite.

14. Method of claim 12 or 13, wherein the alkene comprises propylene, and the zeolites adsorption efficiency for propylene is at least 30%, preferably 100%, greater than non-cation comprising zeolite.
